# FASCICULE DE BREVET EUROPEEN

(11) **EP 4 127 411 B1**
(45) Date de publication et mention de la délivrance du brevet: **14.05.2025**
(21) Numéro de dépôt: 21716507.5
(22) Date de dépôt: 22.03.2021
(51) Int. Cl.: F01D 9/04, F01D 11/00, F01D 11/04, F01D 25/24

(54) **ENSEMBLE D'ANNEAU ET DE DISTRIBUTEUR DE TURBINE DE TURBOMACHINE**
ANORDNUNG AUS TURBINENRING UND STATOR EINER TURBOMASCHINE
ASSEMBLY OF A TURBOMACHINE TURBINE RING AND STATOR

(30) Priorité: 24.03.2020 FR 2002855
(43) Date de publication de la demande: 08.02.2023
(73) Titulaire: SAFRAN AIRCRAFT ENGINES, 75015 Paris (FR)
(72) Inventeur: JARROSSAY, Clément, 77550 MOISSY-CRAMAYEL (FR); CAZIN, Clément Emile André, 77550 MOISSY-CRAMAYEL (FR); CONGRATEL, Sébastien, Serge, Francis, 77550 MOISSY-CRAMAYEL (FR); DANIS, Antoine Claude Michel Etienne, 77550 MOISSY-CRAMAYEL (FR); GAILLARD, Aurélien, 77550 MOISSY-CRAMAYEL (FR)
(74) Mandataire: Regimbeau
(86) Numéro de dépôt international: PCT/FR2021/050465
(87) Numéro de publication internationale: WO 2021/191534

(56) Documents cités:
- EP-A2- 2 642 078
- FR-A1- 2 937 098
- FR-A1- 3 004 518
- US-A1- 2016 186 596

## Description

### DOMAINE DE L'INVENTION

La présente invention se rapporte à un ensemble d'anneau et de distributeur de turbine de turbomachine.

### ETAT DE LA TECHNIQUE

Le domaine d'application de l'invention est notamment celui des moteurs aéronautiques à turbine à gaz. L'invention est toutefois applicable à d'autres turbomachines, par exemple des turbines industrielles.

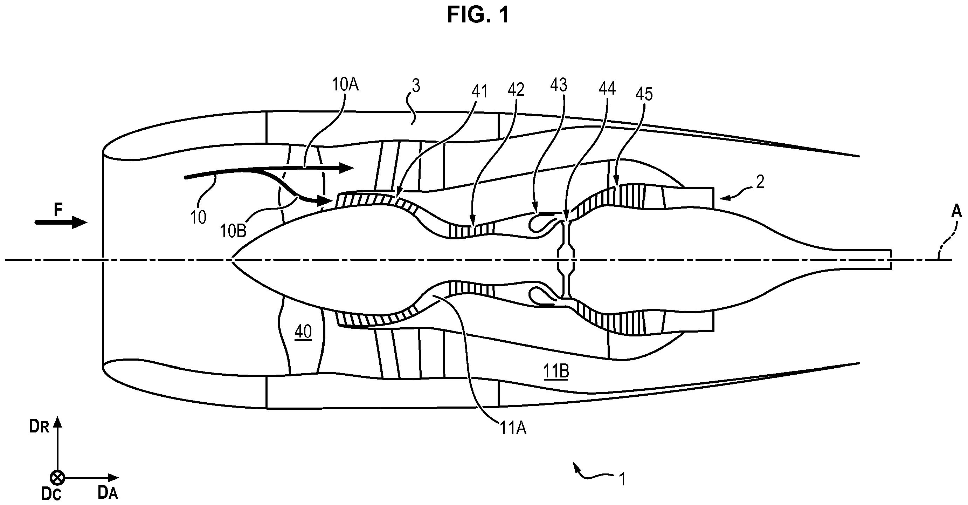

À la figure 1 annexée est représenté un ensemble propulsif 1 d'aéronef qui comprend une turbomachine 2 carénée par une nacelle 3. Dans l'exemple représenté, la turbomachine 2 est un turboréacteur à double corps et à double flux.

Cette figure comporte un référentiel D_{A}, D_{R} et D_{C} qui définit respectivement les directions longitudinale (axiale), radiale et circonférentielle, lesquelles sont orthogonales entre elles.

Dans la suite de la présente description, les termes « amont » et « aval » sont définis par rapport à une direction principale F d'écoulement d'un flux de gaz à travers l'ensemble propulsif 1 lorsque celui-ci est propulsé, c'est-à-dire de la gauche vers la droite sur les figures annexées. La direction F est parallèle à la direction longitudinale de l'ensemble.

Le turboréacteur 2 présente un axe central longitudinal A autour duquel s'étendent ses différents composants, à savoir, de l'amont vers l'aval, une soufflante 40, un compresseur basse pression 41, un compresseur haute pression 42, une chambre de combustion 43, une turbine haute pression 44 et une turbine basse pression 45. Les compresseurs 41 et 42, la chambre de combustion 43 et les turbines 44 et 45 forment ensemble un générateur de gaz.

Lors du fonctionnement du turboréacteur 2, un écoulement d'air 10 pénètre dans l'ensemble propulsif 1 par une entrée d'air en amont de la nacelle 3, puis traverse la soufflante 40 et se divise alors en un flux primaire 10A central et en un flux secondaire 10B. Le flux primaire 10A s'écoule dans une veine principale 11A de circulation des gaz traversant les compresseurs 41 et 42, la chambre de combustion 43 et les turbines 44 et 45. Le flux secondaire 10B s'écoule, quant à lui, dans une veine secondaire 11B entourant le générateur de gaz et délimitée radialement vers l'extérieur par la nacelle 3.

L'objet de l'invention s'inscrit notamment dans le cadre de l'intégration d'un stator externe de turbine haute pression comprenant un anneau, par exemple en composite à matrice céramique (CMC). L'intégration de cet anneau en CMC, dont la température de tenue est élevée, permet de réduire le débit d'air prélevé en fond de chambre, nécessaire à la pressurisation des cavités hors veine, et donc de gagner en consommation spécifique du moteur.

Cet anneau étant ainsi moins refroidi, c'est également moins de débit d'air frais qui va longer l'amont de la plateforme du distributeur basse pression qui est situé en aval de l'anneau précité. Il en découle un risque de dégradation de cette zone.

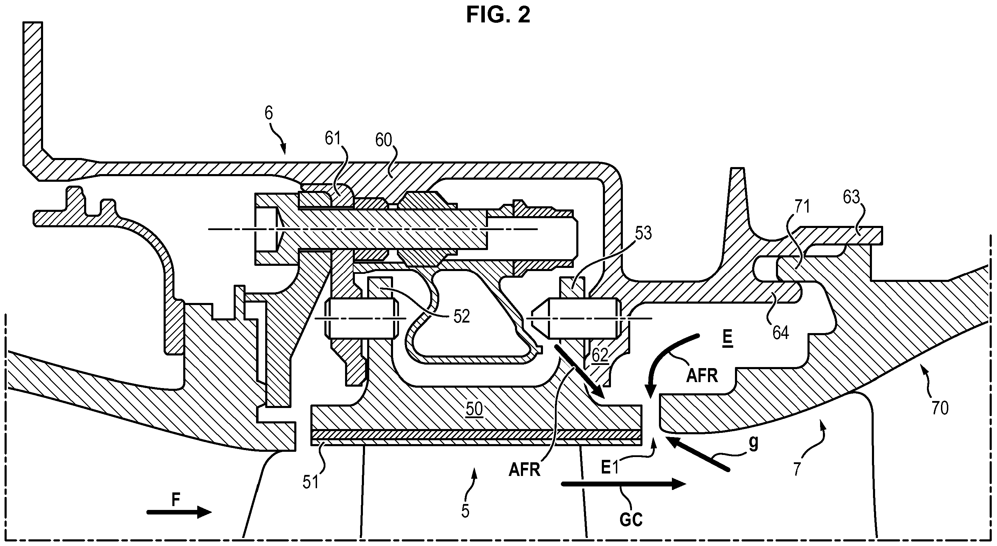

Les figures 2 à 4 annexées permettent de mieux comprendre "l'architecture" de cette zone et les phénomènes mis en œuvre.

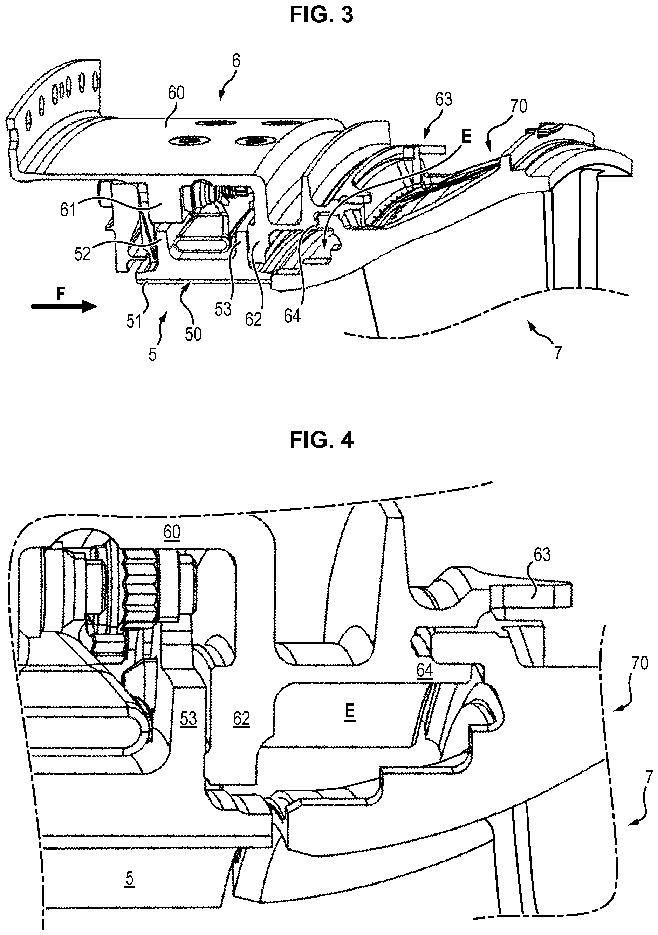

Ainsi, tout particulièrement, sont visibles partiellement sur les figures 2 et 3 un anneau de turbine 5 en matériau composite à matrice céramique (CMC) et une structure métallique 6 de support de cet anneau.

Cet anneau 5 entoure un ensemble de pales rotatives (lesquelles ne sont pas représentées ici) et est formé d'une pluralité de secteurs d'anneau 50 (dont un seul est visible les figures). Les flèches DA et DR indiquent respectivement les directions axiale et radiale de l'anneau 5 de turbine.

Comme illustré sur les figures, chaque secteur d'anneau 50 présente, selon un plan défini par les directions axiale D_{A} et radiale D_{R}, une section sensiblement en forme de la lettre grecque π (pi) inversée. Cette section comprend une base annulaire 51 et des pattes radiales d'accrochage amont et aval, respectivement 52 et 53. Dans des formes de réalisation non illustrées ici, la section de l'anneau pourrait avoir une forme différente, par exemple similaire à celle de la lettre "K".

La structure 6 de support d'anneau 5, qui est solidaire d'un carter de turbine, comprend une virole centrale 60, qui s'étend globalement dans la direction axiale D_{A}. Son axe de révolution est confondu avec l'axe de révolution de l'anneau 5 de turbine lorsqu'ils sont fixés ensemble. La structure comprend en outre une première et une seconde brides radiales annulaires 61, respectivement 62. La première bride 61 est positionnée en amont de la seconde bride 62.

D'autres moyens, tels que des flasques annulaires, des pions et des ensembles vis/écrous permettent d'immobiliser les secteurs d'anneau 50, aussi bien en direction axiale que radiale.

En aval de la virole centrale 60 et plus précisément en aval de la bride 62, la structure 6 se prolonge généralement axialement par un ensemble de cloisons dont certaines 63 et 64 servent notamment au maintien de la plateforme 70 radialement externe d'un distributeur 7 (équipé d'une aube 72) de la turbine basse pression 45 précitée. Sur les figures, le distributeur n'a été représenté que partiellement car on s'intéresse ici essentiellement à sa partie "externe", c'est à dire à celle qui se situe dans la continuité, dans le sens aval, de l'anneau 5.

Le distributeur 7 est monté, via un crochet 71, au niveau d'une zone de montage dans une gorge de la structure 6.

Cette conformation particulière de la virole centrale 60 de la structure 6 et de la plateforme 70 du distributeur 7 fait qu'il subsiste entre elles un espace annulaire E qui débouche radialement vers l'intérieur dans la région E1 pour rejoindre le flux primaire cité en introduction.

A la figure 2, est représenté sous la forme d'une flèche GC le flux de gaz chauds qui circule, dans la veine principale 11A précitée et "lèche" l'anneau 5, ainsi que la plateforme 70 du distributeur 7.

Toutefois, un débit d'air frais issu d'un prélèvement au sein du compresseur haute pression 42 circule en direction du distributeur 7. Plus précisément, l'air transite par un chemin principal pour refroidir le distributeur en traversant une chemise (non visible sur les dessins).

Néanmoins, de l'air fuit selon un chemin secondaire qui dérive du chemin principal, notamment par des interstices non étanches situés là où la structure 6 se raccorde à la plateforme 70.

Par ailleurs, de l'air de refroidissement de l'anneau 6 s'échappe au travers de celui-ci pour générer ensemble des "courants d'air" de fuite repérés par la référence AFR à la figure 2. Malheureusement, le débit d'air ainsi généré, relativement dispersé, qui tend à s'échapper par l'espace E1, n'est pas suffisant pour refroidir la partie amont de la plateforme 70 du distributeur 7.

Quand l'anneau 5 est en métal et malgré un débit d'air frais important dans cette zone, il existe un risque de dégradation de cette partie amont. Et lorsque l'anneau est en composite à matrice céramique (CMC), en raison du débit d'air consacré à son refroidissement significativement plus faible, ce risque est encore accentué. La région concernée est celle située à l'extrémité de la flèche g de la figure 2.

La présente invention a justement pour but d'apporter une solution ce problème. Exprimé différemment, la présente invention a pour but, sans modifier l'architecture des pièces présentes, de fournir des moyens qui permettent de limiter, voire d'empêcher le risque de dégradation formulé plus haut.

On notera qu'un art antérieur d'intérêt est décrit dans les documents FR3004518, US2016/186596, FR2937098 et EP2642078.

### PRESENTATION DE L'INVENTION

A cet effet, l'invention concerne un ensemble de turbine de turbomachine s'étendant autour d'un axe et comprenant :
- une pluralité de secteurs d'anneau formant un anneau de turbine
- une structure de support d'anneau de turbine, chaque secteur d'anneau ayant, selon un plan de coupe défini par une direction axiale et une direction radiale de l'anneau de turbine, ladite direction axiale correspondant au sens d'écoulement d'un flux gazeux dans ladite turbine, une partie formant base avec, dans la direction radiale de l'anneau de turbine, une face radialement interne définissant la face interne de l'anneau de turbine et une face radialement externe à partir de laquelle s'étendent en saillie des pattes d'accrochage, ladite structure de support d'anneau comportant une virole de laquelle s'étendent en saillie des brides radiales par lesquelles sont maintenues lesdites pattes d'accrochage de chaque secteur d'anneau ;

- un distributeur situé, relativement audit sens d'écoulement d'un flux gazeux dans ladite turbine, en aval dudit anneau de turbine et monté via un crochet au niveau d'une zone de montage dans une gorge de la structure de support d'anneau, le distributeur comportant une aube pourvue d'une plateforme radialement externe, la plateforme s'étendant axialement en regard dudit anneau de turbine ;
- un espace annulaire étant défini entre l'anneau, la structure de support et la plateforme, cet espace annulaire étant parcouru, lors du fonctionnement de ladite turbine, par un courant d'air de fuite provenant d'un espace situé radialement à l'extérieur du distributeur et qui fuit en traversant la zone de montage,
caractérisé par le fait qu'il comporte un anneau creux qui occupe ledit espace annulaire et qui est conformé pour collecter ledit courant d'air de fuite, le canaliser et l'expulser dans la région radialement interne dudit espace annulaire, entre ledit anneau de turbine et la plateforme.

Grâce à ces caractéristiques, l'air de refroidissement est "collecté" par l'anneau creux et réinjecté dans la veine primaire. En procédant ainsi, l'écoulement d'air est accéléré, ce qui permet de maximiser les coefficients d'échange thermique avec la zone amont de la plateforme du distributeur basse pression et, par voie de conséquence, de réduire sa température, de manière à garantir une meilleure tenue de la pièce.

Selon d'autres caractéristiques non limitatives et avantageuses de l'invention, prises individuellement ou selon une combinaison quelconque d'au moins deux d'entre elles :
- ledit anneau creux comporte une entrée d'air en forme de fente annulaire pour collecter le courant d'air de fuite ;
- l'anneau creux comporte une sortie d'air comprenant un ensemble d'orifices d'éjection d'air formés dans la paroi de l'anneau ;
- les orifices sont répartis circonférentiellement autour de l'anneau creux ;
- les orifices sont positionnés de manière à être orientés vers une zone amont de la plateforme ;
- les entrée et sortie sont décalées axialement l'une par rapport à l'autre, l'entrée étant située en aval relativement à la sortie ;
- l'anneau creux présente une paroi courbée, conformée pour être fixée à la plateforme et qui délimite un bord de ladite entrée ;
- les orifices sont agencés au fond d'une gorge de l'anneau creux ;
- l'anneau creux est métallique.

Enfin, la présente invention est également relative à une turbomachine comprenant un ensemble d'anneau de turbine conforme à l'une quelconque des caractéristiques détaillées ci-dessus.

### DESCRIPTION DES FIGURES

D'autres caractéristiques et avantages de l'invention apparaîtront de la description qui va maintenant en être faite, en référence aux dessins annexés, qui en représentent, à titre indicatif mais non limitatif, des modes de réalisation possibles.

Sur ces dessins :
[Fig. 1] est une vue schématique partielle d'un ensemble propulsif d'aéronef conforme à la présente invention ;
[Fig. 2] est une vue partielle, en coupe, d'un ensemble comprenant un anneau et de distributeur ;
[Fig. 3] est une vue tridimensionnelle et en coupe de l'ensemble de la figure 2 ;
[Fig. 4] est une vue agrandie d'une partie de la figure 3 ;
[Fig. 5] est une vue de détail de l'espace entre l'anneau et le distributeur qui reçoit, représenté en coupe, un anneau creux de canalisation et d'expulsion d'air ;
[Fig. 6] est une vue partielle, en coupe, de l'anneau visible à la figure 5 ;

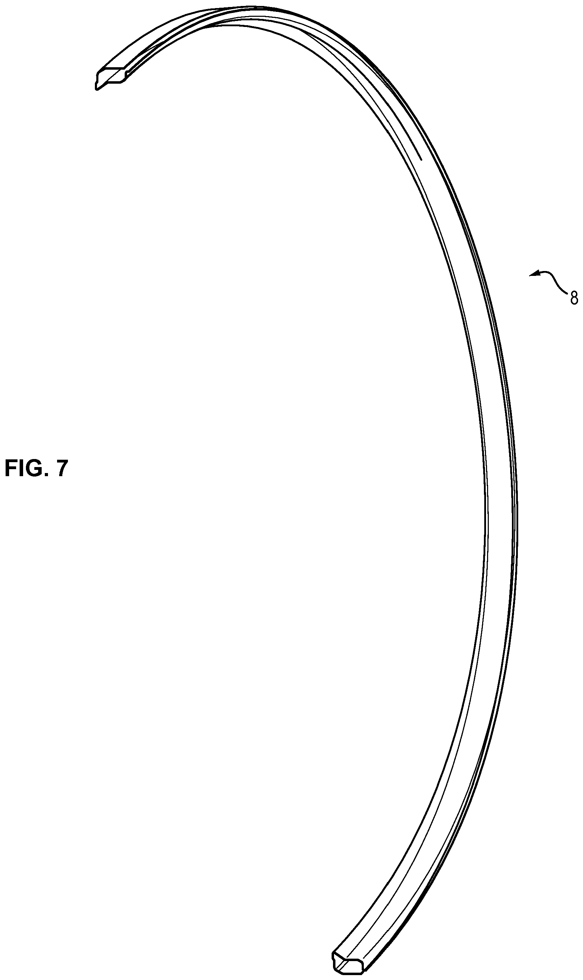

[Fig. 7] est une vue analogue à la figure précédente, qui montre une partie substantielle de l'anneau ;
[Fig. 8] est une vue analogue à la figure 3, qui montre le positionnement de l'anneau précité et le parcours de l'air à travers celui-ci.

### DESCRIPTION DETAILLEE DE L'INVENTION

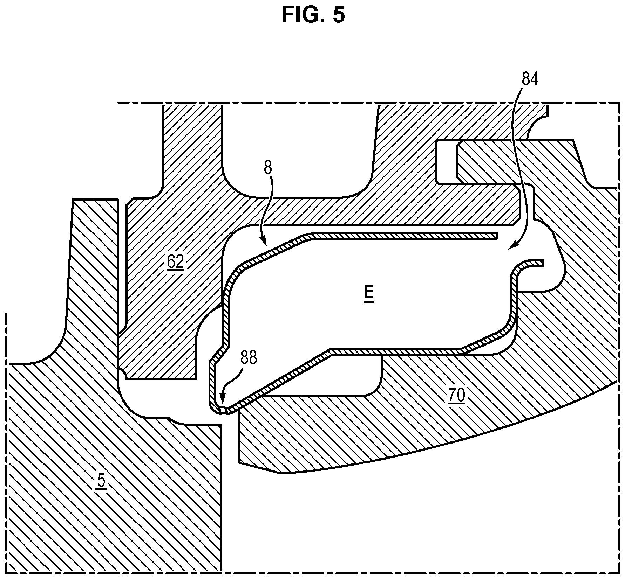

On se reportera désormais plus particulièrement aux figures 5 et suivantes pour décrire l'anneau creux 8 qui forme partie de l'ensemble selon la présente invention.

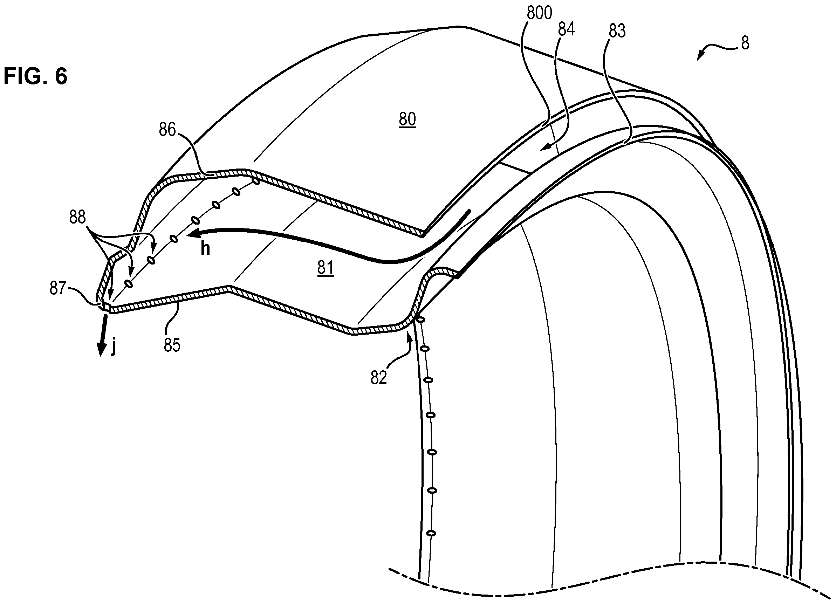

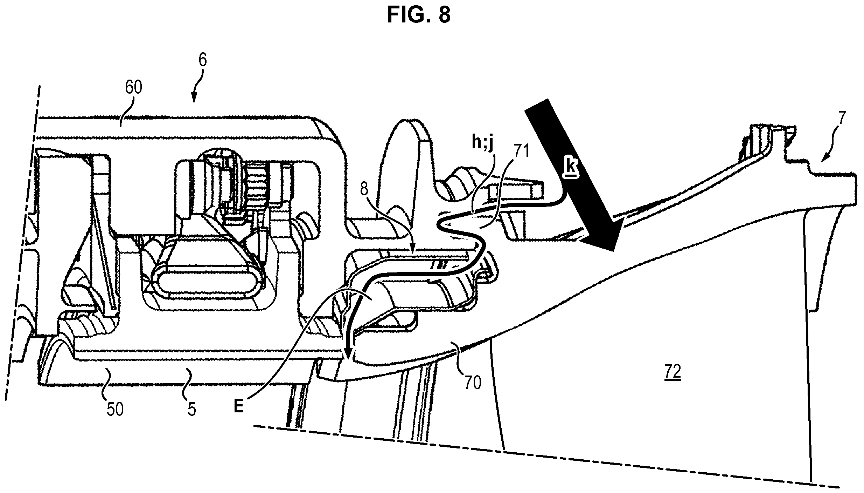

Cet anneau creux 8 est préférentiellement métallique. Ainsi que cela est particulièrement visible à la figure 6, l'anneau 8 comporte deux parois annulaires parallèles 80 et 81. Lorsque l'anneau 8 est en place dans l'ensemble selon la présente invention et comme montré à la figure 8, ces deux parois 80 et 81 ont leurs génératrices qui s'étendent parallèlement à la direction axiale de la turbine.

La paroi 80, que l'on peut qualifier de paroi externe, s'interrompt en direction aval selon un bord franc 800 constituant l'une des limites d'une entrée annulaire 84 sur laquelle on reviendra plus loin dans cette description.

La paroi 81, que l'on peut qualifier de paroi interne, se prolonge quant à elle, en direction aval, par une aile 82 de profil sinueux, en forme générale de "S". L'extrémité aval de de "S", référencée 83, constitue une paroi courbée qui est conformée pour être fixée à la plateforme 70, ainsi qu'on le verra plus loin. Cette extrémité constitue par ailleurs la seconde limite de l'entrée annulaire 84.

Ladite extrémité aval 83 est décalée axialement du bord 800 de la paroi 80, de sorte que l'espace qui se situe entre eux matérialise une fente annulaire 84, qui forme une entrée pour l'air de refroidissement à canaliser.

Dans le sens amont, les parois 80 et 81 précitées se poursuivent sensiblement parallèlement l'une à l'autre en direction radialement interne par deux flancs 86 et 85, qui se rejoignent pour constituer ensemble une gorge annulaire 87 dirigée radialement.

Au fond de la gorge 87 est agencée une sortie d'air annulaire qui a ici la forme d'un ensemble d'orifices traversants 88. Avantageusement, ces orifices sont répartis circonférentiellement autour de l'anneau creux. La distribution de ces orifices 88 en fond de gorge peut être régulière ou choisie en fonction du débit d'air souhaité dans certaines zones de la gorge.

Ils ont pour but d'accélérer le débit d'air qui traverse l'anneau 8. A titre purement indicatif, leur diamètre peut être compris entre 0.2 et 2mm.

Ainsi que cela est plus particulièrement visibles aux figures 5 et 8, l'anneau creux 8 est positionné au sein de l'ensemble précité dans l'espace E où circulent des courants d'air de fuite. La forme générale de l'anneau 8 est particulièrement adaptée à la forme de cet espace.

L'anneau 8 est maintenu en place par compression entre le distributeur 7 et la patte aval 62 de la structure 6 de turbine haute pression.

A la figure 8, on a représenté par la flèche k le courant principal d'air de refroidissement du distributeur 7, et par les flèches h et j (également visibles à la figure 6), le courant d'air de fuite.

Contrairement à la situation de l'art antérieur dans laquelle cet air qui est dispersé, atteint partiellement et ne refroidit pas suffisamment la zone ciblée, grâce à l'anneau creux 8 décrit ci-dessus, la majeure partie de cet air est collectée par l'entrée en forme de fente annulaire 84.

Au sein de l'anneau, les parois 80 et 81 agissent comme des déflecteurs qui canalisent, c'est à dire orientent l'air vers la gorge 87, de laquelle il s'échappe au travers des orifices 88 en autant de filets d'air dont la vitesse s'est accélérée au passage à travers ceux-ci.

Si besoin, les orifices 88 sont positionnés de manière à être orientés vers différentes "zones chaudes" de la plateforme 70 du distributeur 7.

Grâce à la présence de cet anneau creux 8, on parvient à obtenir un abaissement particulièrement notable des "zones chaudes" de la plateforme du distributeur.

## Revendications

1. Ensemble de turbine de turbomachine s'étendant autour d'un axe et comprenant :
une pluralité de secteurs d'anneau (50) formant un anneau (5) de turbine ;
une structure (6) de support d'anneau de turbine, chaque secteur d'anneau (50) ayant, selon un plan de coupe défini par une direction axiale (D_{A}) et une direction radiale (D_{R}) de l'anneau (5) de turbine, ladite direction axiale correspondant au sens d'écoulement d'un flux gazeux (F) dans ladite turbine, une partie formant base (51) avec, dans la direction radiale (D_{R}) de l'anneau (5) de turbine, une face radialement interne définissant la face interne de l'anneau (5) de turbine et une face radialement externe à partir de laquelle s'étendent en saillie des pattes d'accrochage (52, 53), ladite structure (6) de support d'anneau (5) comportant une virole (60) de laquelle s'étendent en saillie des brides radiales (61, 62) par lesquelles sont maintenues lesdites pattes d'accrochage (52, 53) de chaque secteur (50) d'anneau ;
un distributeur (7) situé, relativement audit sens d'écoulement (F) d'un flux gazeux dans ladite turbine, en aval dudit anneau (5) de turbine et monté via un crochet (71) au niveau d'une zone de montage dans une gorge de la structure (6) de support d'anneau (5), le distributeur (7) comportant une aube (72) pourvue d'une plateforme (70) radialement externe, la plateforme (70) s'étendant axialement en regard dudit anneau (5) de turbine ;
un espace annulaire (E) étant défini entre l'anneau (5), la structure de support (6) et la plateforme (70), cet espace annulaire (E) étant parcouru, lors du fonctionnement de ladite turbine, par un courant d'air de fuite provenant d'un espace situé radialement à l'extérieur du distributeur et qui fuit en traversant la zone de montage,
**caractérisé par le fait qu'**il comporte un anneau creux (8) qui occupe ledit espace annulaire (E) et qui est conformé pour collecter ledit courant d'air de fuite, le canaliser et l'expulser dans une région radialement interne dudit espace annulaire (E), entre ledit anneau (5) de turbine et la plateforme (70).

2. Ensemble selon la revendication 1, **caractérisé par le fait que** ledit anneau creux (8) comporte une entrée (84) d'air en forme de fente annulaire pour collecter le courant d'air de fuite.

3. Ensemble selon la revendication 1 ou 2, **caractérisé par le fait que** ledit anneau creux (8) comporte une sortie (87) d'air comprenant un ensemble d'orifices (88) d'éjection d'air formés dans la paroi de l'anneau creux (8).

4. Ensemble selon la revendication 3, **caractérisé par le fait que** lesdits orifices (88) sont répartis circonférentiellement autour de l'anneau creux (8).

5. Ensemble selon la revendication 3 ou 4, **caractérisé par le fait que** les orifices (88) sont positionnés de manière à être orientés vers une zone amont de la plateforme (70).

6. Ensemble selon les revendications 2 et 3 prises en combinaison, **caractérisé en ce que** l'entrée (84) et la sortie (87) sont décalées axialement l'une par rapport à l'autre, l'entrée (84) étant située en aval relativement à la sortie (87).

7. Ensemble selon la revendication 6, **caractérisé par le fait que** l'anneau creux (8) présente une paroi courbée (83), conformée pour être fixée à la plateforme (70) et qui délimite un bord de l'entrée (84).

8. Ensemble selon l'une des revendications 3 à 7, **caractérisé par le fait que** les orifices (88) sont agencés au fond d'une gorge de l'anneau creux (8).

9. Ensemble selon l'une des revendications précédentes, **caractérisé par le fait que** l'anneau creux (8) est métallique.

10. Turbomachine comprenant un ensemble selon l'une quelconque des revendications 1 à 9.

## Patentansprüche

1. Turbinenanordnung einer Turbomaschine, die sich um eine Achse erstreckt und umfasst:
eine Vielzahl von Ringsektoren (50), die einen Turbinenring (5) bilden;
eine Turbinenring-Tragstruktur (6), wobei jeder Ringsektor (50) entlang einer Schnittebene, die durch eine axiale Richtung (D_{A}) und eine radiale Richtung (D_{R}) des Turbinenringes (5) definiert ist, wobei die axiale Richtung der Strömungsrichtung eines Gasstroms (F) in der Turbine entspricht, einen Teil hat, der eine Basis (51) bildet, mit, in der Radialrichtung (D_{R}) des Turbinenrings (5), einer radial inneren Fläche, die die Innenfläche des Turbinenrings (5) definiert, und einer radial äußeren Fläche, von der aus sich hervorstehend Befestigungslaschen (52, 53) erstrecken, wobei die Tragstruktur (6) des Rings (5) einen Ringmantel (60) umfasst, von dem aus sich hervorstehend radiale Flansche (61, 62) erstrecken, mit denen die Befestigungslaschen (52, 53) jedes Ringsektors (50) gehalten werden;
einen Verteiler (7), der sich relativ zur Strömungsrichtung (F) eines Gasstroms in der Turbine stromabwärts des Turbinenrings (5) befindet und über einen Haken (71) im Bereich einer Montagezone in einer Nut der Tragstruktur (6) des Rings (5) angebracht ist, wobei der Verteiler (7) eine Schaufel (72) aufweist, die mit einer radial äußeren Plattform (70) versehen ist, wobei sich die Plattform (70) axial dem Turbinenring (5) zugewandt erstreckt;
wobei ein ringförmiger Raum (E) zwischen dem Ring (5), der Tragstruktur (6) und der Plattform (70) definiert ist, wobei dieser ringförmige Raum (E) während des Betriebs der Turbine von einem Leckluftstrom durchströmt wird, der aus einem radial außerhalb des Verteilers liegenden Raum kommt und die Montagezone durquerend entweicht,
**dadurch gekennzeichnet, dass** sie einen Hohlring (8) umfasst, der den ringförmigen Raum (E) einnimmt und ausgebildet ist, um den Leckluftstrom zu sammeln, ihn zu kanalisieren und in eine radial innere Region des ringförmigen Raums (E) zwischen dem Turbinenring (5) und der Plattform (70) auszustoßen.

2. Anordnung nach Anspruch 1, **dadurch gekennzeichnet, dass** der Hohlring (8) einen Lufteinlass (84) in Form eines Ringschlitzes zum Sammeln des Leckluftstroms aufweist.

3. Anordnung nach Anspruch 1 oder 2, **dadurch gekennzeichnet, dass** der Hohlring (8) einen Luftauslass (87) aufweist, der eine Anordnung von Luftausstoßöffnungen (88) umfasst, die in der Wand des Hohlrings (8) ausgebildet sind.

4. Anordnung nach Anspruch 3, **dadurch gekennzeichnet, dass** die Öffnungen (88) umfangmäßig um den Hohlring (8) verteilt sind.

5. Anordnung nach Anspruch 3 oder 4, **dadurch gekennzeichnet, dass** die Öffnungen (88) derart positioniert sind, dass sie zu einer stromaufwärts gelegenen Zone der Plattform (70) ausgerichtet sind.

6. Anordnung nach den Ansprüchen 2 und 3 in Kombination, **dadurch gekennzeichnet, dass** der Einlass (84) und der Auslass (87) axial zueinander versetzt sind, wobei sich der Einlass (84) relativ zum Auslass (87) stromabwärts befindet.

7. Anordnung nach Anspruch 6, **dadurch gekennzeichnet, dass** der Hohlring (8) eine gekrümmte Wand (83) aufweist, die zur Befestigung an der Plattform (70) ausgebildet ist und einen Rand des Einlasses (84) begrenzt.

8. Anordnung nach einem der Ansprüche 3 bis 7, **dadurch gekennzeichnet, dass** die Öffnungen (88) am Boden einer Nut des Hohlrings (8) eingerichtet sind.

9. Anordnung nach einem der vorhergehenden Ansprüche, **dadurch gekennzeichnet, dass** der Hohlring (8) aus Metall besteht.

10. Turbomaschine, umfassend eine Anordnung nach einem der Ansprüche 1 bis 9.

## Claims

1. A turbomachine turbine assembly extending around an axis and comprising:
a plurality of ring sectors (50) forming a turbine ring (5);
a turbine ring support structure (6), each ring sector (50) having, in a section plane defined by an axial direction (D_{A}) and a radial direction (D_{R}) of the turbine ring (5), said axial direction corresponding to the flow direction of a gas flow (F) in said turbine, a portion forming a base (51) with, in the radial direction (D_{R}) of the turbine ring (5), a radially inner face defining the inner face of the turbine ring (5) and a radially outer face from which latching tabs (52, 53) project, said ring (5) support structure (6) including a shroud (60) from which radial flanges (61, 62) project, by which said latching tabs (52, 53) of each ring sector (50) are retained;
a stator (7) located, relative to said flow direction (F) of a gas flow in said turbine, downstream of said turbine ring (5) and mounted via a hook (71) at a mounting zone in a recess of the ring (5) support structure (6), the stator (7) including a vane (72) provided with a radially outer platform (70), the platform (70) extending axially facing said turbine ring (5);
an annular space (E) being defined between the ring (5), the support structure (6) and the platform (70), this annular space (E) being traversed, during the operation of said turbine, by a leakage air current originating in a space located radially outside the stator and which leaks while passing through the mounting zone,
**characterized by** the fact that it includes a hollow ring (8) which occupies said annular space (E) and which is formed to collect said leakage air current, to channel it and to expel it in a radially inner region of said annular space (E), between said turbine ring (5) and the platform (70).

2. The assembly according to claim 1, **characterized by** the fact that said hollow ring (8) includes an air inlet (84) in the form of an annular slit for collecting the leakage air current.

3. The assembly according to claim 1 or 2, **characterized by** the fact that said hollow ring (8) includes an air outlet (87) comprising a set of air ejection orifices (88) formed in the wall of the hollow ring (8).

4. The assembly according to claim 3, **characterized by** the fact that said orifices (88) are distributed circumferentially around the hollow ring (8).

5. The assembly according to claim 3 or 4, **characterized by** the fact that the orifices (88) are positioned so as to be oriented toward an upstream zone of the platform (70).

6. The assembly according to claims 2 and 3 taken in combination, **characterized in that** the inlet (84) and the outlet (87) are axially offset with respect to one another, the inlet (84) being located downstream relative to the outlet (87).

7. The assembly according to claim 6, **characterized by** the fact that the hollow ring (8) has a curved wall (83), formed to be attached to the platform (70), and which delimits an edge of the inlet (84).

8. The assembly according to one of claims 3 to 7, **characterized by** the fact that the orifices (88) are arranged at the bottom of a recess of the hollow ring (8).

9. The assembly according to one of the preceding claims, **characterized by** the fact that the hollow ring (8) is metallic.

10. A turbomachine comprising an assembly according to any one of claims 1 to 9.
